# EUROPÄISCHE PATENTSCHRIFT

(11) **EP 3 245 325 B1**
(45) Veröffentlichungstag und Bekanntmachung des Hinweises auf die Patenterteilung: **09.10.2019**
(21) Anmeldenummer: 15820169.9
(22) Anmeldetag: 28.12.2015
(51) Int. Cl.: D06F 37/20, F16F 7/08

(54) **HAUSHALTSGERÄT ZUR PFLEGE VON WÄSCHESTÜCKEN MIT EINER SPEZIFISCHEN ANBINDUNG EINES DÄMPFERS AN EIN GEHÄUSE DES HAUSHALTSGERÄTS**
DOMESTIC APPLIANCE FOR THE CARE OF LAUNDRY ITEMS HAVING A SPECIFIC ATTACHMENT OF A DAMPER TO A HOUSING OF THE DOMESTIC APPLIANCE
APPAREIL ÉLECTROMÉNAGER POUR ENTRETENIR DES ARTICLES DE LINGE AVEC FIXATION SPÉCIFIQUE D'UN AMORTISSEUR AU BOÎTIER DE L'APPAREIL MÉNAGER

(30) Priorität: 15.01.2015 DE 102015200546
(43) Veröffentlichungstag der Anmeldung: 22.11.2017
(73) Patentinhaber: BSH Hausgeräte GmbH, 81739 München (DE)
(72) Erfinder: GÜNZEL, Klaus, 10967 Berlin (DE); CUI, Xuli, Nanjing Jiangsu 211000 (CN); BITTIGAU, Raik, 12524 Berlin (DE); NEUMANN, Verina, 14059 Berlin (DE)
(86) Internationale Anmeldenummer: PCT/EP2015/081280
(87) Internationale Veröffentlichungsnummer: WO 2016/113103

(56) Entgegenhaltungen:
- EP-A1- 1 388 603
- DE-A1- 19 921 152
- JP-A- 2011 004 839

## Beschreibung

Die Erfindung betrifft ein Haushaltsgerät zur Pflege von Wäschestücken mit einem Gehäuse und mit einem in dem Gehäuse bewegbar angeordneten Behälter. Das Haushaltsgerät umfasst darüber hinaus zumindest einen Dämpfer, welcher mit dem Behälter und dem Gehäuse verbunden ist und mit einer mindestens einer Befestigungsvorrichtung an das Gehäuse und/oder dem Behälter angebunden ist, wobei die Befestigungsvorrichtung ein elastisch verformbares Bauteil umfasst.

Aus der EP 1 496 147 A1 ist eine Befestigungsvorrichtung zur Befestigung eines Dämpfers an einer Waschmaschine bekannt. Die Befestigungsvorrichtung umfasst ein einstückiges Teil, welches ein erstes Segment und ein zweites Segment aufweist, wobei das zweite Segment aus Gummi gebildet ist und zur direkten Anbindung eines Dämpferendes vorgesehen ist. Das einstückige Teil ist als Winkelbauteil ausgebildet, wobei das verformbare zweite Segment als geradliniges, rohrartiges Bauteil gestaltet ist. Es erstreckt sich senkrecht zu dem ersten Segment des Teils.

Darüber hinaus ist aus der JP 2011-004839 A eine Waschmaschine bekannt, bei welcher ebenfalls eine bewegbare Trommel über einen Dämpfer an das Gehäuse der Waschmaschine angebunden ist. Bei der dortigen Befestigungsvorrichtung ist ein Gummigehäuse vorgesehen, in welchem mehrere separate rohrartige und zu Rinnen geformte Membrankörper angeordnet sind, wobei in diesen rohrförmigen Teilen eine Luftfüllung enthalten ist.

Aus der DE 199 21 152 A1 ist ein Haushaltsgerät bekannt. Dort ist in einem Waschmaschinengehäuse eine Waschtrommel angeordnet. Ein Reibungsdämpfer ist mit dieser Waschtrommel verbunden. Andererseits ist der Reibungsdämpfer mit einer Anlenk-Vorrichtung verbunden. Die Anlenk-Vorrichtung ist mit einem Maschinengestell des Gehäuses verbunden. Die Anlenk-Vorrichtung weist zwei Anschlussstopfen auf, die durch ein rohrförmiges Federelement verbunden sind.

Bei Haushaltsgeräten zur Pflege von Wäschestücken tritt im Betrieb aufgrund der Bewegung des bewegbaren Behälters und insbesondere im Schleuderbetrieb ein Schwingungsverhalten auf, welches zu unerwünschten mechanischen Schwingungen führt. Durch die Befestigungsvorrichtungen soll in Wirkverbindung mit dem Dämpfer die Übertragung dieser Schwingungen über das Gehäuse an die Umgebung reduziert werden. Eine derartige Verringerung der an die Umgebung abgegebenen Schwingungsenergie ist sowohl bezogen auf den von dem Haushaltsgerät angeregten Luftschall als auch bezüglich des in baulichen Strukturen erzeugten Sekundärluftschalls herbeizuführen.

In dem Zusammenhang ist es bekannt, dass ein als Reibdämpfer ausgebildeter Dämpfer ein Haupttransferpfad für im Schwingsystem des Haushaltsgeräts entstehenden Vibrationen ist und entsprechend beim Schleudervorgang entsprechende Schwingungen auch an die Umgebung und insbesondere somit auch an den Boden, auf welchem das Haushaltsgerät aufgestellt ist, abgegeben werden. Bei als Freihubbauart ausgebildeten Dämpfern tritt in dem Zusammenhang ein Anregen von Klapperschwingungen auf. Diese erzeugen auch audiblen Luftschall.

Die aus dem Stand der Technik bekannten Ausgestaltungen von Befestigungsvorrichtungen derartiger Dämpfer können bezüglich ihrer Anbindung an das Gehäuse nur bedingt Einhalt der unerwünschten Schwingungsübertragung gewähren.

Es ist Aufgabe der vorliegenden Erfindung, ein Haushaltsgerät zur Pflege von Wäschestücken zu schaffen, bei welchem durch eine verbesserte Befestigungsvorrichtung zur Anbindung des Dämpfers an das Gehäuse und/oder an den Behälter eine wesentliche Reduktion der Schwingungsübertragung auf das Gehäuse und somit auch von diesem auf die Umwelt erreicht ist.

Diese Aufgabe wird durch ein Haushaltsgerät zur Pflege von Wäschestücken gemäß den Merkmalen des Anspruchs 1 gelöst.

Ein erfindungsgemäßes Haushaltsgerät zur Pflege von Wäschestücken umfasst ein Gehäuse und einen in dem Gehäuse bewegbar angeordneten Behälter. Das Haushaltsgerät umfasst darüber hinaus zumindest einen Dämpfer, welcher mit dem Behälter und dem Gehäuse direkt oder indirekt verbunden ist. Darüber hinaus umfasst das Haushaltsgerät mindestens eine Befestigungsvorrichtung, mit welcher der Dämpfer an das Gehäuse und/oder an den Behälter angebunden ist. Die Befestigungsvorrichtung umfasst ein elastisch verformbares Bauteil. Es können auch mehrere solche Befestigungsvorrichtungen bzw. elastische verformbare Bauteile umfasst sein, beispielsweise können an einer Anbindungsstelle des Dämpfers mehrere miteinander verbundene Befestigungsvorrichtungen oder an der jeweiligen Anbindungsstelle des Dämpfers mit dem Gehäuse und dem Behälter kann jeweils eine Befestigungsvorrichtung angeordnet sein. Ein wesentlicher Gedanke der Erfindung ist darin zu sehen, dass das elastisch verformbare Bauteil in Richtung seiner Längsachse betrachtet und somit in axialer Richtung zwischen dem Dämpfer und dem Gehäuse bzw. dem Behälter angeordnet ist und ein erstes elastisch verformbares Verformteil, welches dem Gehäuse bzw. dem Behälter zugewandt ist, und ein dem Dämpfer zugewandtes zweites elastisch verformbares Verformteil aufweist. Das zweite elastisch verformbare Verformteil ist mit dem ersten elastisch verformbaren Verformteil mit mehreren elastisch verformbaren Verbindungsbändern des verformbaren Bauteils verbunden. Durch diese spezifische Ausgestaltung des verformbaren Bauteils kann eine unerwünschte Schwingungsübertragung von dem Dämpfer auf das Gehäuse und von dem Gehäuse in die Umgebung zumindest wesentlich reduziert werden. Bevorzugt ist das spezifisch ausgestaltete verformbare Bauteil zwischen dem Dämpfer und dem Gehäuse angeordnet. Der Aufbau dieses verformbaren Bauteils ermöglicht somit eine Anbindung mit einer multidirektionalen nichtlinearen Kraft-Weg-Kennung. Dadurch wird eine deutliche Reduktion des zum Gehäuse hin transmittierten Körperschalls erreicht. Bei sich bewegendem Behälter entsteht durch die Erfindung keine Anregung von akustisch relevanten Klappergeräuschen. Durch die Ausgestaltung der Befestigungsvorrichtung führt dies somit auch zu einer Reduktion der abgestrahlten Schallleistung des im Schleuderbetrieb des Behälters befindlichen Haushaltsgeräts. Durch das verformbare Bauteil werden auch diese Klappergeräusche, nicht oder zumindest deutlich reduziert an das Gehäuse weitergeleitet. Darüber hinaus wird durch die erfindungsgemäße Ausgestaltung des verformbaren Bauteils die Sekundärschallanregung in baulichen Strukturen wesentlich reduziert. Die Ausgestaltung der Befestigungsvorrichtung führt darüber hinaus auch dazu, dass ein räumlicher Freihubeffekt des Dämpfers genutzt werden kann.

Die Verbindungsbänder können in dem Sinne auch als Sehnen, die die beiden verformbaren Verformteile verbinden, angesehen werden. Sie erstrecken sich daher zwischen den beiden Verformteilen und sind mit beiden Verformteilen verbunden. Somit sind die Verbindungsbänder an ihren jeweiligen gegenüberliegenden und formspezifisch bedingten beiden Enden jeweils auch an ein Verformteil angebunden und sind mit somit den ohnehin nur vorhandenen zwei Enden nicht freiliegend, sondern mit den Verformteilen in direkte Wirkverbindung.

Vorzugsweise ist vorgesehen, dass im unverformten Zustand des verformbaren Bauteils in axialer Richtung dieses Bauteils betrachtet das erste Verformteil und das zweite Verformteil beabstandet und in Reihe mit dazwischen angeordneten Verbindungsbändern zueinander angeordnet sind. Durch eine derartige Ausgestaltung wird die individuelle und situationsspezifische Verformbarkeit und somit auch Relativbewegbarkeit der Verformteile begünstigt und insbesondere dann auch die gewünschten und individuellen Verformungen der Verbindungsbänder erreicht.

Vorzugsweise ist vorgesehen, dass das erste Verformteil an der dem zweiten Verformteil zugewandten Seite als Trichter ausgebildet ist. Durch diese Ausgestaltung wird bei der Verformung des Bauteils auch ein gewisses Eintauchen des zweiten Verformteils in das erste Verformteil ermöglicht. Insbesondere wird dadurch eine Zentrierung und Kanalisierung der Bewegung zueinander erreicht. Die oben genannten Vorteile werden dadurch nochmals begünstigt.

Vorzugsweise ist vorgesehen, dass die Verbindungsbänder an einem Trichterrand des zumindest bereichsweise als Trichter ausgebildeten ersten Verformteils münden. Dadurch wird eine besonders vorteilhafte Anbindungsstelle der Verbindungsbänder im Hinblick auf die individuelle elastische Verformung der Verbindungsbänder einerseits und des ersten Verformteils andererseits erreicht. Die oben genannten individuellen Verformungen und situationsbedingten Deformationen werden dadurch definierter ermöglicht und die jeweiligen Vorteile zur Schwingungsübertragungsreduktion erreicht.

Vorzugsweise ist vorgesehen, dass das zweite Verformteil an der dem ersten Verformteil zugewandten Seite eine zum ersten Verformteil hin orientierte Ausbauchung aufweist. Das in axialer Richtung erfolgende Eintauchen des zweiten Verformteils in das erste Verformteil wird dadurch begünstigt.

Vorzugsweise ist vorgesehen, dass an einem Ausbauchungstiefpunkt dieser Ausbauchung eine dem ersten Verformteil zugewandt ausgebildete Erhebung ausgebildet ist. Durch eine derartige Nase beziehungsweise Nocke wird auch sehr definiert und flächenminimiert im Falle einer relativ großen Verformung ein Anlegen des ersten Verformteils an das zweite Verformteil erreicht. Dies hat auch wieder entsprechende Vorteile auf eine Reduktion der Schwingungsübertragung.

Vorzugsweise ist vorgesehen, dass das zweite Verformteil an der dem Dämpfer zugewandten Seite eine zum Dämpfer hin offene Vertiefung aufweist, welche mit einem Boden zum ersten Verformteil hin begrenzt ist. Der Boden weist an der dem ersten Verformteil zugewandten Seite die Ausbauchung auf. Durch eine derartige Ausgestaltung wird die definierte und gewünschte Verformung dieser Ausbauchung begünstigt, und eine flexiblere Verformung in verschiedenen Richtungen dieser Ausbauchung ist erreicht.

Vorzugsweise ist dieser Boden elastisch verformbar ausgebildet.

Es kann vorgesehen sein, dass dieses zweite Verformteil mit der genannten spezifischen Ausgestaltung nur mit einem dem Boden abgewandten oberen Rand der die Vertiefung begrenzenden Seitenwand an den Dämpfer angebunden beziehungsweise angekoppelt ist und somit mit dem Dämpfer nur diesbezüglich örtlich spezifisch verbunden ist. Bei einer derartigen Ausgestaltung taucht dann der Dämpfer in diese Vertiefung nicht ein.

Es kann jedoch auch vorgesehen sein, dass bei einer alternativen Ausgestaltung der Dämpfer in diese Vertiefung eintaucht und angeordnet ist und somit von dem zweiten Verformteil außenseitig zumindest bereichsweise umgeben ist, vorzugsweise vollflächig und formschlüssig anliegend umgeben ist.

Vorzugsweise ist vorgesehen, dass in einer Richtung senkrecht zur Längsachse des verformbaren Bauteils betrachtet seitlich an die Ausbauchung anschließend Anbindungsstege für die Verbindungsbänder ausgebildet sind. Durch derartig individuell geformte und örtlich spezifisch angeordnete Anbindungsstege ist die Mündung und somit auch die Anbindung der Verbindungsbänder verbessert und deren individuelle Verformbarkeit in sich selbst und auch relativ zu dem ersten Verformteil und/oder dem zweiten Verformteil begünstigt.

Vorzugsweise ist vorgesehen, dass Mündungen der Verbindungsbänder an die Anbindungsstege in einer Richtung senkrecht zur Längsachse des verformbaren Bauteils betrachtet weiter entfernt und somit mit größerem Abstand von dieser Längsachse angeordnet sind, als Mündungen der Verbindungsbänder an den Trichterrand. Dies bedeutet somit, dass die Verbindungsbänder im unverformten Zustand des Bauteils nicht parallel zu der Längsachse verlaufen, sondern in einem gewissen Winkel dazu angeordnet sind und insbesondere ausgehend von dem ersten Verformteil sich quasi schräg nach oben und nach außen orientiert zum zweiten Verformteil hin erstrecken.

Es wird somit quasi zumindest teilweise die Trichterform des ersten Verformteils durch die Orientierung der Verbindungsbänder weitergeführt und somit quasi der Trichter nach oben hin durch diese Verbindungsbänder erweitert.

Durch eine derartige spezifische Anordnung und Orientierung der Verbindungsbänder wird die individuelle Verformbarkeit des gesamten Bauteils und auch Teilkomponenten davon begünstigt. Dadurch wird die Reduktion der unerwünschten Schwingungsübertragung nochmals verbessert.

Vorzugsweise ist vorgesehen, dass die Verbindungsbänder in Umlaufrichtung um eine Längsachse des verformbaren Bauteils beabstandet, insbesondere äquidistant, zueinander angeordnet sind. Dadurch wird die individuelle Verformbarkeit der Verbindungsbänder nicht durch benachbarte Verbindungsbänder beeinträchtigt und darüber hinaus in Wechselwirkung der Verbindungsbänder eine besonders effektive Schwingungsübertragungsreduktion erreicht, da die Verbindungsbänder nicht aneinander anstoßen.

Vorzugsweise ist vorgesehen, dass das erste Verformteil und/oder das zweite Verformteil eine zu den Verbindungsbändern unterschiedliche Verformungselastizität aufweisen, insbesondere eine kleinere Verformungselastizität aufweisen.

Insbesondere ist das verformbare elastische Bauteil einstückig ausgebildet und in dem Zusammenhang auch einstückig hergestellt. Dies bedeutet, dass das Bauteil nicht aus mehreren separaten Komponenten zusammengesetzt ist, wobei an den Verbindungsstellen zerstörungsfrei unlösbare Verbindungen ausgebildet sind, sondern eine derartige Einstückigkeit bedeutet im Kontext der vorliegenden Erfindung eine Herstellung des Bauteils als einziges Bauteil, welches nicht aus mehreren Komponenten durch Erzeugen von zerstörungsfrei unlösbaren Verbindungen ausgebildet ist.

Durch diese Ausgestaltung werden auch positive Effekte im Hinblick auf die Schwingungsübertragungsreduktion erreicht.

Vorzugsweise ist das verformbare Bauteil als ein Elastomerbauteil ausgebildet. Der Dämpfer ist vorzugsweise ein freihubloser Reibdämpfer.

Gerade der Einsatz des erfindungswesentlichen verformbaren Bauteils, insbesondere in Form eines Elastomerbauteils, in Kombination mit einem freihublosen Reibdämpfer ermöglicht, wie es für einen Freihubdämpfer charakteristisch ist, einen Isolationseffekt für die Transmission trieffrequenter Schwingungen. Tieffrequent bedeutet in dem Zusammenhang, dass die Schwingfrequenzen im Bereich der ersten und zweiten Ordnung der Behälterschwingung liegen. Im Schleuderbetrieb des Behälters und somit bei entsprechender Drehung um eine Behälterachse liegt die bevorzugte Drehzahl dieses Behälters im Bereich bis zu 1.700 Umdrehungen pro Minute.

Der schwingungsmäßige Isolationseffekt wird insbesondere auch durch die elastisch verformbaren Verbindungsbänder erreicht.

Bezüglich des Isolations- oder Freihubeffekts ist zu erwähnen, dass bei kleinen Verschiebungen zwischen dem Schwingsystem des Haushaltsgeräts und dem Gehäuse des Haushaltsgeräts hauptsächlich die vergleichsweise weichen Verbindungsbänder verformt werden. Die Verformteile werden in dem Zusammenhang im Vergleich dazu gar nicht oder nur geringer verformt. Bei größeren Bewegungen in Zugrichtung und somit in axialer Richtung des Bauteils straffen sich diese Verbindungsbänder, und die Verbindung wird in Axialrichtung steifer. Bei relativ großen Bewegungen in Druckrichtung und somit in ebenfalls axialer Richtung aufeinander zu sitzt die an der Ausbauchung ausgebildete innenliegende Erhebung, insbesondere ein Gummidom, im Trichter des ersten Verformteils auf. Durch dieses Aufsetzen nimmt auch in der Druckstufe die Steifigkeit mit wachsender Auslenkung überproportional zu. Diese Steifigkeitscharakteristik ist auch die Grundlage für den oben genannten Freihubeffekt. Diese Art der Erzeugung des entkoppelnden Effekts bietet signifikante Vorteile gegenüber bekannten Ausführungen von derartigen Befestigungsvorrichtungen, wie sie erläutert wurden.

Wie bereits erwähnt, kann die Anbindung des verformbaren Bauteils durch zerstörungsfrei lösbare Verbindungen, beispielsweise Schraubverbindungen, an das Gehäuse bzw. an den Behälter und/oder den Dämpfer erfolgen. Es kann jedoch auch, wie ebenfalls bereits erwähnt, eine zerstörungsfrei unlösbare Verbindung, wie beispielsweise Verbinden des Bauteils mit dem Dämpfer durch ein Vulkanisieren und somit ein formschlüssiges Fügen, erreicht werden. Eine entsprechende Anbindung kann dann auch zwischen der Befestigungsvorrichtung und dem Gehäuse erfolgen.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen.

Ausführungsbeispiele der Erfindung werden nachfolgend anhand schematischer Zeichnungen näher erläutert. Es zeigen:
- Fig. 1: eine schematische Längsschnittdarstellung durch ein Ausführungsbeispiel eines erfindungsgemäßen Haushaltsgeräts zur Pflege von Wäschestücken;
- Fig. 2: eine Seitenansicht eines Ausführungsbeispiels eines Dämpfers mit einer Befestigungsvorrichtung;
- Fig. 3: eine Schnittdarstellung der Ausgestaltung in Fig. 2;
- Fig. 4: eine weitere Seitenansicht eines weiteren Ausführungsbeispiels eines Dämpfers mit einer Befestigungsvorrichtung;
- Fig. 5: eine Schnittdarstellung der Ausgestaltung in Fig. 4; und
- Fig. 6: eine perspektivische Darstellung des Ausführungsbeispiels des Dämpfers mit einer Befestigungsvorrichtung gemäß Fig. 2 und Fig. 3.

In den Figuren werden gleiche oder funktionsgleiche Elemente mit den gleichen Bezugszeichen versehen.

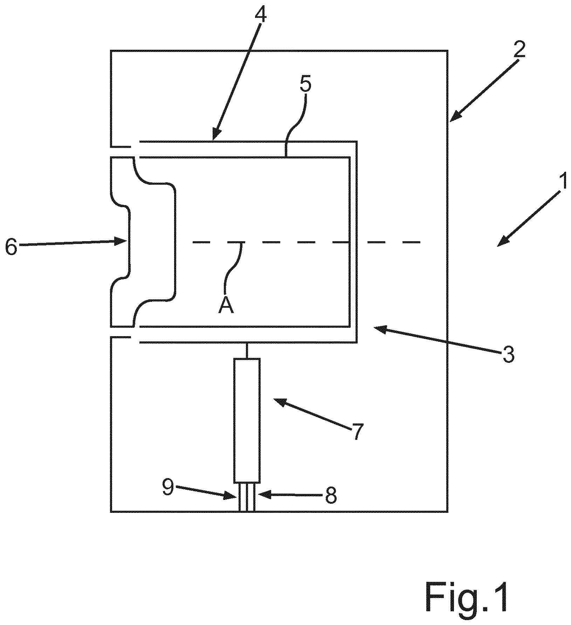

In Fig. 1 ist in einer vereinfachten Vertikalschnittdarstellung ein Ausführungsbeispiel eines erfindungsgemäßen Haushaltsgeräts 1 zur Pflege von Wäschestücken gezeigt. Das Haushaltsgerät 1 kann beispielsweise eine Waschmaschine oder ein Waschtrockner sein. Das Haushaltsgerät 1 kann ein sogenannter Frontlader oder ein Toplader, welche eine im Wesentlichen horizontale oder geneigte Drehachse eines umfassten Wäschebehälters aufweisen, oder ein sogenannter Bottichwaschapparat, welcher eine im Wesentlichen vertikale Drehachse eines umfassten Wäschebehälters aufweist, sein.

Das Haushaltsgerät 1 umfasst ein Gehäuse 2, in dem innenliegend ein Schwingsystem 3 angeordnet ist. Das Schwingsystem 3 umfasst einen bewegbar angeordneten Laugenbehälter 4 sowie eine von dem Laugenbehälter 4 umgebene und im Ausführungsbeispiel um eine Horizontalachse A drehbare Trommel 5, welche zur Aufnahme von Wäschestücken ausgebildet ist. Insbesondere der Laugenbehälter 4 stellt in dem Zusammenhang einen relativ zum Gehäuse 2 bewegbaren Behälter dar.

Im Ausführungsbeispiel sind der Laugenbehälter 4 und die Trommel 5 frontseitig durch eine Tür 6 verschließbar.

Das Schwingsystem 3 umfasst darüber hinaus eine Mehrzahl von Dämpfern 7, wobei in Fig. 1 der Übersichtlichkeit dienend lediglich ein derartiger Dämpfer 7 gezeigt ist. Der Dämpfer 7 ist zur Bewegungsdämpfung des Laugenbehälters 4 und der Trommel 5 ausgebildet und angeordnet. Er ist mit dem Laugenbehälter 4 über eine nicht näher gezeigte Anbindung einerseits und über eine Befestigungsvorrichtung 8 andererseits mit dem Gehäuse 2 verbunden. Die Anbindung des Dämpfers 7 mit dem Laugenbehälter 4 kann auch mit einer Befestigungsvorrichtung, die der Befestigungsvorrichtung 8 entspricht, erfolgen. Nachfolgend wird die Befestigungsvorrichtung 8 nur für den Fall der Dämpferverbindung mit dem Gehäuse 2 beschrieben, wobei diese Ausführungen analog auch auf eine zwischen dem Dämpfer 7 und dem Laugenbehälter 4 angeordnete Befestigungsvorrichtung übertragbar sind.

Die Befestigungsvorrichtung 8 umfasst ein elastisch verformbares Bauteil 9.

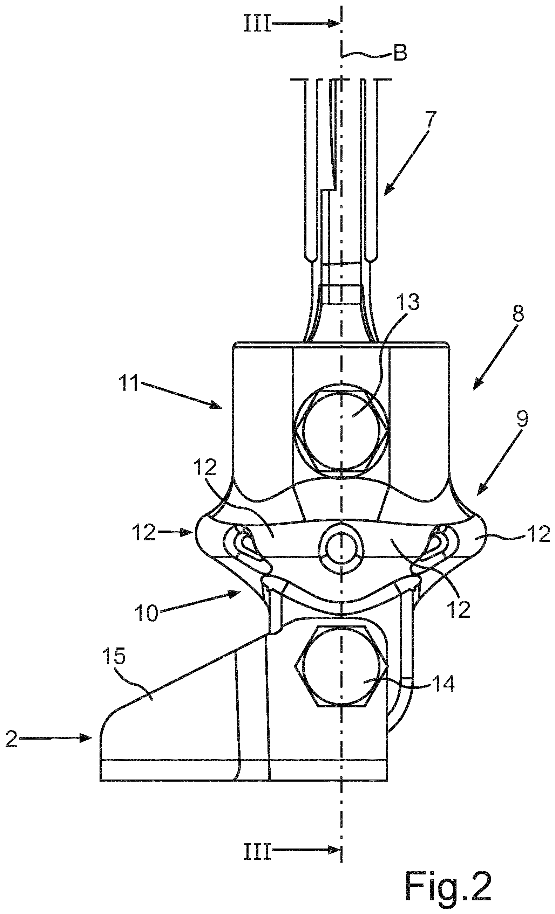

In Fig. 2 ist in einer Seitenansicht ein erstes Ausführungsbeispiel einer Befestigungsvorrichtung 8 mit dem elastisch verformbaren Bauteil 9 gezeigt, wobei darüber hinaus dann auch noch Teilkomponenten des Gehäuses 2 sowie des Dämpfers 7 dargestellt sind. Wie in der Ansicht gemäß Fig. 2 zu erkennen ist, umfasst das einstückig hergestellte und ausgebildete verformbare Bauteil 9, welches ein Elastomerbauteil ist, ein erstes elastisch verformbares Verformteil 10, welches dem Gehäuse 2 zugewandt angeordnet ist. Darüber hinaus umfasst das Bauteil 9 ein zweites elastisch verformbares Verformteil 11, welches dem Dämpfer 7 zugewandt und näherliegend ist, wobei dies in Betrachtungsrichtung einer Längsachse B des verformbaren Bauteils 9 zu sehen ist. Die beiden Verformteile 10 und 11 sind somit in Richtung der Längsachse B betrachtet in Reihe zueinander angeordnet und somit quasi übereinander positioniert.

In dieser axialen Richtung der Längsachse B sind im unverformten Zustand des Bauteils 9 die beiden Verformteile 10 und 11 auch beabstandet zueinander angeordnet, jedoch über eine Mehrzahl von elastisch verformbaren Verbindungsbändern 12 miteinander verbunden. Die elastisch verformbaren Verbindungsbänder 12 beziehungsweise Verbindungssehnen sind in Umlaufrichtung um die Achse B beabstandet, insbesondere äquidistant zueinander angeordnet. Im gezeigten Ausführungsbeispiel gemäß Fig. 2 ist vorgesehen, dass das Bauteil 9 durch eine Schraubverbindung 13 mit dem Dämpfer 7 und durch eine weitere Schraubverbindung 14 mit einem zum Gehäuse 2 zugehörigen Gehäusebauteil 15 verbunden ist.

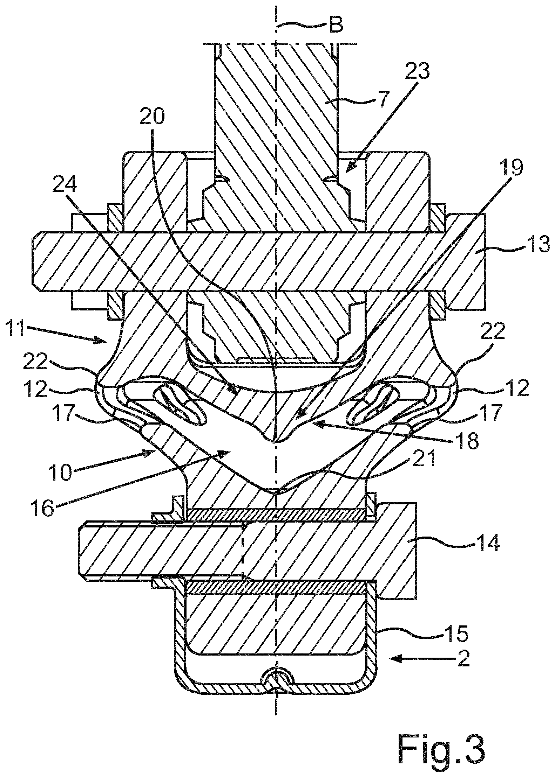

In Fig. 3 ist in einer Schnittdarstellung entlang der Schnittlinie III-III in Fig. 2 die in Fig. 2 gezeigte Bauteilanordnung dargestellt. Wie dabei zu erkennen ist, ist das erste Verformteil 10 auf der dem zweiten Verformteil 11 zugewandten Seite als Trichter 16 ausgebildet. Die Verbindungsbänder 12 münden mit ersten Enden an einen oberen Trichterrand 17. Darüber hinaus ist vorgesehen, dass das zweite Verformteil an seiner dem ersten Verformteil 10 in axialer Richtung betrachtet zugewandten Seite eine Ausbauchung 18 aufweist, die zum ersten Verformteil 10 hin orientiert ausgebildet ist. An einem Ausbauchungstiefpunkt 19 ist eine weitere, zum ersten Verformteil 10 hin erhaben ausgebildete Erhebung 20 ausgebildet. Diese Erhebung 20 beziehungsweise ein entsprechend gestalteter Dom kann bei spezifischen Verformungen des Bauteils 9 an einem Trichtertiefpunkt 21 sich anlegen beziehungsweise anschlagen.

Darüber hinaus ist zu erkennen, dass in einer Richtung senkrecht zur Längsachse B betrachtet seitlich an die Ausbauchung 18 anschließend jeweils mehrere Anbindungsstege 22 ausgebildet sind, an welche die Verbindungsbänder 12 mit ihren oberen Enden münden.

In dem Zusammenhang ist gemäß Fig. 2 und Fig. 3 zu erkennen, dass die Verbindungsbänder 12 im unverformten Zustand des Bauteils 9 nicht parallel zur Längsachse B verlaufen, sondern in einem spezifischen Winkel dazu. In diesem in Fig. 2 und Fig. 3 gezeigten unverformten Zustand des Bauteils 9 sind somit die Verbindungsbänder 12 vom ersten Verformteil 10 her betrachtet nach außen und oben zum zweiten Verformteil 11 hin orientiert, sodass quasi die Ausgestaltung des Trichters 16 des ersten Formteils 10 zum zweiten Verformteil 11 hin durch die Verbindungsbänder 12 fortgesetzt wird und somit quasi in einer gewissen Art und Weise der Trichter 16 durch die Verbindungsbänder 12 formspezifisch erweitert ist.

In dem Ausführungsbeispiel gemäß Fig. 2 und Fig. 3 ist darüber hinaus auch zu erkennen, dass das zweite Verformteil 11 eine Vertiefung 23 aufweist, die zum Dämpfer 7 hin offen ist und in welche der Dämpfer 7 bereichsweise eintaucht. Der Dämpfer 7 ist in dem Zusammenhang auch über diese Vertiefung 23 mit diese Vertiefung 23 begrenzenden Seitenwänden des zweiten Verformteils 11 verbunden, und eine diesbezügliche Schraubverbindung 13 ist durch diese die Vertiefung 23 begrenzenden Seitenwände des zweiten Verformteils 11 geführt.

Die Vertiefung 23 ist zum ersten Verformteil 10 hin durch einen Boden 24 begrenzt, der auch eine gewölbte Innenseite aufweist. Auf der der Vertiefung 23 abgewandten Außenseite dieses Bodens 24 ist die bereits erläuterte Ausbauchung 18 ausgebildet. Wie in der Darstellung gemäß Fig. 3 zu erkennen ist, sitzt der Dämpfer 7 nicht direkt auf dem Boden 24 auf, sondern ist beabstandet dazu gehalten. Der Boden 24 ist elastisch verformbar ausgebildet. Es kann vorgesehen sein, dass die Verbindungsbänder 12 eine zum ersten Verformteil 10 und/oder zum zweiten Verformteil 11 unterschiedliche Verformungselastizität aufweisen, insbesondere eine kleinere Verformungselastizität aufweisen. Durch diese Ausgestaltung kann in spezifischen Betriebssituationen und insbesondere bei verschiedenen individuellen, durch die jeweilige individuelle Drehzahl der Trommel hervorgerufenen Schwingungsanregungen eine zeitlich vorgelagerte und/oder individuell andere Verformung der Verbindungsbänder 12 im Vergleich zu den Verformteilen 10 und/oder 11 erreicht werden.

Es kann jedoch auch vorgesehen sein, dass die Verformungselastizität der Verbindungsbänder 12 gleich zu denen der Verformteile 10 und 11 ist und lediglich durch die Formausgestaltung der Verbindungsbänder 12 auch eine derartige individuelle frühzeitigere und/oder betriebsphasenabhängig unterschiedlich stärkere oder weniger starke Verformung der Verbindungsbänder 12 im Vergleich zu dem Verformteil 10 und/oder dem Verformteil 11 erreicht ist.

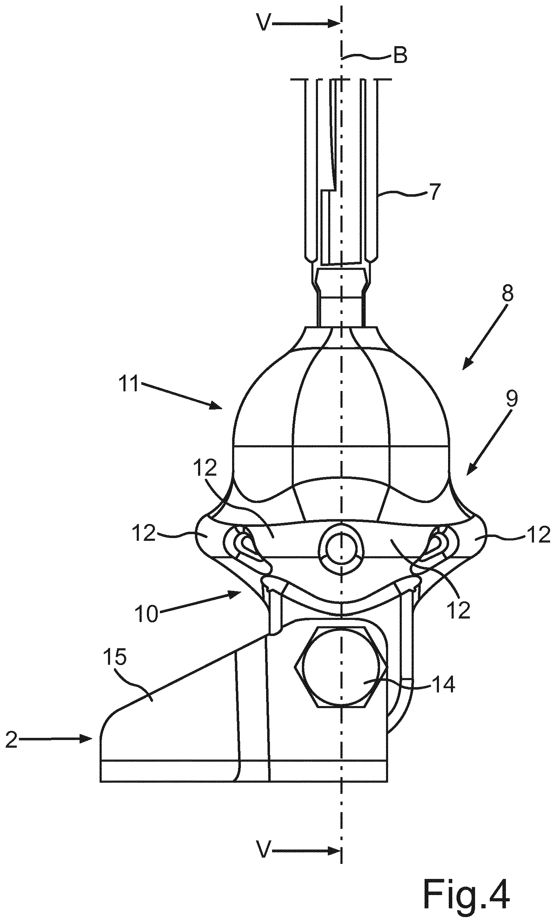

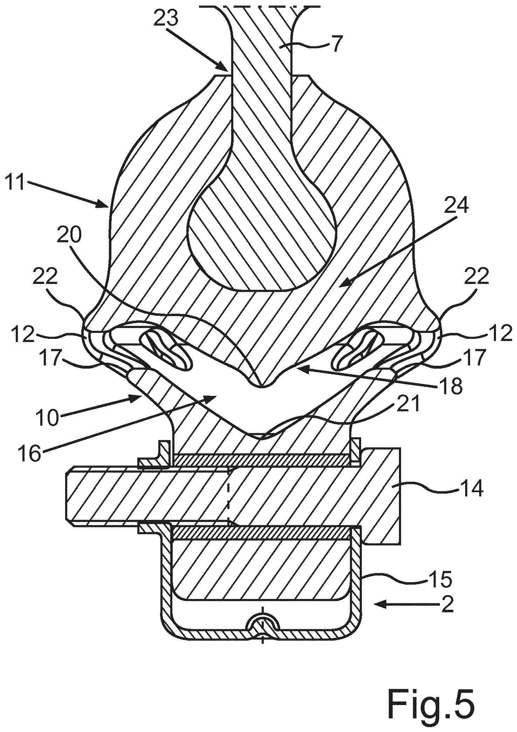

In Fig. 4 ist in einer weiteren Seitenansicht ein weiteres Ausführungsbeispiel einer Befestigungsvorrichtung 8 mit einem elastisch verformbaren Bauteil 9 gezeigt. In Fig. 5 ist dazu die Schnittdarstellung entlang der Schnittlinie V-V gezeigt. Wie dabei zu erkennen ist, ist der Unterschied zu der Ausführung gemäß Fig. 2 und Fig. 3 darin gegeben, dass der Dämpfer 7 nicht durch eine zerstörungsfrei lösbare Verbindung, insbesondere eine Schraubverbindung 13, mit dem zweiten Verformteil 11 verbunden ist, sondern zerstörungsfrei unlösbar, insbesondere durch ein formschlüssiges Fügen wie beispielsweise ein Vulkanisieren, mit dem zweiten elastisch verformbaren Verformteil 11 verbunden ist.

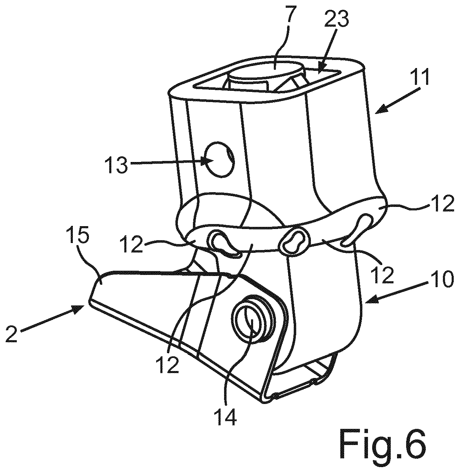

In Fig. 6 ist in einer perspektivischen Darstellung die Ausführung gemäß Fig. 2 und Fig. 3 gezeigt.

### Bezugszeichenliste

- 1: Haushaltsgerät
- 2: Gehäuse
- 3: Schwingsystem
- 4: Laugenbehälter
- 5: Trommel
- 6: Tür
- 7: Dämpfer
- 8: Befestigungsvorrichtung
- 9: Bauteil
- 10: Verformteil
- 11: Verformteil
- 12: Verbindungsbänder
- 13: Schraubverbindung
- 14: Schraubverbindung
- 15: Gehäusebauteil
- 16: Trichter
- 17: Trichterrand
- 18: Ausbauchung
- 19: Ausbauchungstiefpunkt
- 20: Erhebung
- 21: Trichtertiefpunkt
- 22: Anbindungsstege
- 23: Vertiefung
- 24: Boden
- A: Horizontalachse
- B: Längsachse
- III: Schnittlinie
- V: Schnittlinie

## Patentansprüche

1. Haushaltsgerät (1) zur Pflege von Wäschestücken, mit einem Gehäuse (2) und einem in dem Gehäuse (2) bewegbar angeordneten Behälter (4, 5), und mit zumindest einem Dämpfer (7), welcher mittels mindestens einer Befestigungsvorrichtung (8) mit dem Behälter (4, 5) und dem Gehäuse (2) verbunden ist, wobei die Befestigungsvorrichtung (8) mindestens ein elastisch verformbares Bauteil (9) umfasst, wobei das verformbare Bauteil (9) ein erstes elastisch verformbares Verformteil (10), welches dem Gehäuse (2) bzw. dem Behälter (4, 5) zugewandt ist, und ein dem Dämpfer (7) zugewandtes zweites elastisch verformbares Verformteil (11) aufweist, **dadurch gekennzeichnet, dass** das verformbare Bauteil (9) in axialer Richtung zwischen dem Dämpfer (7) und dem Gehäuse (2), zwischen dem Dämpfer (7) und dem Behälter (4, 5) oder jeweils ein solches verformbares Bauteil (9) zwischen dem Dämpfer (7) und dem Gehäuse (2) und zwischen dem Dämpfer (7) und dem Behälter (4, 5)) angeordnet ist und dass das zweite elastische Verformteil (11) mit dem ersten Verformteil (10) mit mehreren elastisch verformbaren Verbindungsbänder (12) des verformbaren Bauteils (9) verbunden ist.

2. Haushaltsgerät (1) nach Anspruch 1, **dadurch gekennzeichnet, dass** im unverformten Zustand des Bauteils (9) in axialer Richtung des Bauteils (9) betrachtet das erste Verformteil (10) und das zweite Verformteil (11) beabstandet zueinander angeordnet sind.

3. Haushaltsgerät (1) nach Anspruch 1 oder 2, **dadurch gekennzeichnet, dass** das erste Verformteil (10) an der dem zweiten Verformteil (11) zugewandten Seite als Trichter (16) ausgebildet ist.

4. Haushaltsgerät (1) nach Anspruch 3, **dadurch gekennzeichnet, dass** die Verbindungsbänder (12) an einen Trichterrand (17) des Trichters (16) münden.

5. Haushaltsgerät (1) nach einem der vorhergehenden Ansprüche, **dadurch gekennzeichnet, dass** das zweite Verformteil (11) an der dem ersten Verformteil (10) zugewandten Seite eine zum ersten Verformteil (10) hin orientierte Ausbauchung (18) aufweist.

6. Haushaltsgerät (1) nach Anspruch 5, **dadurch gekennzeichnet, dass** an einem Ausbauchungstiefpunkt (19) eine dem ersten Verformteil (10) zugewandt ausgebildete Erhebung (20) ausgebildet ist.

7. Haushaltsgerät (1) nach Anspruch 5 oder 6, **dadurch gekennzeichnet, dass** das zweite Verformteil (11) an der dem Dämpfer (7) zugewandten Seite eine zum Dämpfer (7) hin offene Vertiefung (23) aufweist, welche mit einem Boden (24) zum ersten Verformteil (10) hin begrenzt ist, wobei der Boden (24) an der dem ersten Verformteil (10) zugewandten Seite die Ausbauchung (18) aufweist.

8. Haushaltsgerät (1) nach Anspruch 7, **dadurch gekennzeichnet, dass** der Boden (24) elastisch verformbar ist.

9. Haushaltsgerät (1) nach einem der Ansprüche 5 bis 8, **dadurch gekennzeichnet, dass** in einer Richtung senkrecht zur Längsachse (B) des verformbaren Bauteils (9) seitlich an die Ausbauchung (18) anschließend Anbindungsstege (22) für die Verbindungsbänder (12) ausgebildet sind.

10. Haushaltsgerät (1) nach Anspruch 4 und einem der Ansprüche 5 bis 9, **dadurch gekennzeichnet, dass** Mündungen der Verbindungsbänder (12) an die Anbindungsstege (22) in einer Richtung senkrecht zur Längsachse (B) des verformbaren Bauteils (9) betrachtet weiter entfernt von der Längsachse (B) angeordnet sind, als Mündungen der Verbindungsbänder (12) an den Trichterrand (17).

11. Haushaltsgerät (1) nach einem der vorhergehenden Ansprüche, **dadurch gekennzeichnet, dass** die Verbindungsbänder (12) in Umlaufrichtung um eine Längsachse (B) des verformbaren Bauteils (9) beabstandet, insbesondere äquidistant, angeordnet sind.

12. Haushaltsgerät (1) nach einem der vorhergehenden Ansprüche, **dadurch gekennzeichnet, dass** das erste Verformteil (10) und/oder das zweite Verformteil (11) eine zu den Verbindungsbändern (12) unterschiedliche Verformungselastizität aufweisen, insbesondere eine kleinere Verformungselastizität aufweisen.

13. Haushaltsgerät (1) nach einem der vorhergehenden Ansprüche, **dadurch gekennzeichnet, dass** das verformbare Bauteil (9) einstückig ausgebildet ist.

14. Haushaltsgerät (1) nach einem der vorhergehenden Ansprüche, **dadurch gekennzeichnet, dass** das verformbare Bauteil (9) ein Elastomerbauteil ist.

15. Haushaltsgerät (1) nach einem der vorhergehenden Ansprüche, **dadurch gekennzeichnet, dass** der Dämpfer (7) ein freihubloser Reibdämpfer ist.

## Claims

1. Household appliance (1) for the care of laundry items, with a housing (2) and a container (4, 5) which is arranged movably in the housing (2), and with at least one damper (7), which is connected by means of at least one fastening apparatus (8) to the container (4, 5) and the housing (2), wherein the fastening apparatus (8) comprises at least one elastically deformable component (9), wherein the deformable component (9) has a first elastically deformable moulded part (10), which faces towards the housing (2) or the container (4, 5), and a second elastically deformable moulded part (11) which faces towards the damper (7), **characterised in that** the deformable component (9) is arranged in an axial direction between the damper (7) and the housing (2), between the damper (7) and the container (4, 5) or in each case such a deformable component (9) is arranged between the damper (7) and the housing (2) and between the damper (7) and the container (4, 5)) and that the second elastic moulded part (11) is connected to the first moulded part (10) with several elastically deformable connecting strips (12) of the deformable component (9).

2. Household appliance (1) according to claim 1, **characterised in that** in the undeformed state of the component (9) viewed in the axial direction of the component (9), the first moulded part (10) and the second moulded part (11) are arranged at a distance from one another.

3. Household appliance (1) according to claim 1 or 2, **characterised in that** the first moulded part (10) is embodied as a funnel (16) on the side facing towards the second moulded part (11).

4. Household appliance (1) according to claim 3, **characterised in that** the connecting strips (12) lead onto a funnel edge (17) of the funnel (16).

5. Household appliance (1) according to one of the preceding claims, **characterised in that** the second moulded part (11) on the side facing towards the first moulded part (10) has a bulge (18) oriented towards the first moulded part (10).

6. Household appliance (1) according to claim 5, **characterised in that** a protrusion (20) embodied facing towards the first moulded part (10) is embodied on a low point of the bulge (19).

7. Household appliance (1) according to claim 5 or 6, **characterised in that** the second moulded part (11) on the side facing towards the damper (7) has an indentation (23) which is open towards the damper (7), which indentation (23) is limited towards the first moulded part (10) with a base (24), wherein the base (24) has the bulge (18) on the side facing towards the first moulded part (10).

8. Household appliance (1) according to claim 7, **characterised in that** the base (24) is elastically deformable.

9. Household appliance (1) according to one of claims 5 to 8, **characterised in that**, in a direction perpendicular to the longitudinal axis (B) of the deformable component (9), connecting webs (22) for the connecting strips (12) are embodied joining laterally onto the bulge (18).

10. Household appliance (1) according to claim 4 and one of claims 5 to 9, **characterised in that** ends of the connecting strips (12) leading onto the connecting webs (22) viewed in a direction perpendicular to the longitudinal axis (B) of the deformable component (9) are arranged at a greater distance from the longitudinal axis (B) than ends of the connecting strips (12) leading onto the funnel edge (17).

11. Household appliance (1) according to one of the preceding claims, **characterised in that** the connecting strips (12) are arranged at a distance, in particular equidistantly, in the peripheral direction about a longitudinal axis (B) of the deformable component (9).

12. Household appliance (1) according to one of the preceding claims, **characterised in that** the first moulded part (10) and/or the second moulded part (11) have a different deformation elasticity, in particular a smaller deformation elasticity, to the connecting strips (12).

13. Household appliance (1) according to one of the preceding claims, **characterised in that** the deformable component (9) is embodied in one piece.

14. Household appliance (1) according to one of the preceding claims, **characterised in that** the deformable component (9) is an elastomer component.

15. Household appliance (1) according to one of the preceding claims, **characterised in that** the damper (7) is a friction damper without a free stroke.

## Revendications

1. Appareil électroménager (1) destiné à entretenir des articles de linge, comprenant un boîtier (2) et un récipient (4, 5) disposé de façon mobile dans le boîtier (2) et au moins un amortisseur (7), qui est relié au récipient (4, 5) et au boîtier (2) au moyen d'au moins un dispositif de fixation (8), dans lequel le dispositif de fixation (8) comprend au moins un élément déformable élastiquement (9), l'élément déformable (9) comporte un premier élément à déformation déformable élastiquement (10) dirigé vers le boîtier (2) resp. le récipient (4, 5) et un second élément à déformation déformable élastiquement (11) dirigé vers l'amortisseur (7), **caractérisé en ce que** l'élément déformable (9) est disposé, dans la direction axiale, entre l'amortisseur (7) et le boîtier (2), entre l'amortisseur (7) et le récipient (4, 5) ou, à chaque fois, ledit élément déformable (9) est disposé entre l'amortisseur (7) et le boîtier (2) et entre l'amortisseur (7) et le récipient (4, 5) et **en ce que** le second élément à déformation déformable élastiquement (11) est relié au premier élément à déformation (10) au moyen d'une pluralité de bandes de liaison déformables élastiquement (12) de l'élément déformable (9).

2. Appareil électroménager (1) selon la revendication 1, **caractérisé en ce que**, dans l'état non déformé de l'élément (9), considérés dans la direction axiale de l'élément (9), le premier élément à déformation (10) et le second élément à déformation (11) sont disposés à distance l'un de l'autre.

3. Appareil électroménager (1) selon la revendication 1 ou 2, **caractérisé en ce que** le premier élément à déformation (10) est formé sur le côté dirigé vers le second élément à déformation (11) sous forme de trémie (16).

4. Appareil électroménager (1) selon la revendication 3, **caractérisé en ce que** les bandes de liaison (12) sont ouvertes sur un bord de trémie (17) de la trémie (16).

5. Appareil électroménager (1) selon l'une des revendications précédentes, **caractérisé en ce que** le second élément à déformation (11) comporte un renflement (18) orienté vers l'intérieur du premier élément à déformation (10) sur le côté dirigé vers le premier élément à déformation (10).

6. Appareil électroménager (1) selon la revendication 5, **caractérisé en ce qu'**une élévation (20) dirigée vers le premier élément à déformation (10) est formée au niveau d'un point bas du renflement (19).

7. Appareil électroménager (1) selon la revendication 5 ou 6, **caractérisé en ce que** le second élément à déformation (11) comporte un évidement (23) s'ouvrant vers l'intérieur de l'amortisseur (7) sur le côté dirigé vers l'amortisseur (7), lequel évidement est délimité par rapport au premier élément à déformation (10) par un fond (24), le fond (24) comportant le renflement (18) sur le côté dirigé vers le premier élément à déformation (10).

8. Appareil électroménager (1) selon la revendication 7, **caractérisé en ce que** le fond (24) est déformable élastiquement.

9. Appareil électroménager (1) selon l'une des revendications 5 à 8, **caractérisé en ce que** des nervures de liaison (22) sont formées ensuite pour les bandes de liaison (12) dans une direction perpendiculaire à l'axe longitudinal (B) de l'élément déformable (9) latéralement au renflement (18).

10. Appareil électroménager (1) selon la revendication 4 et l'une des revendications 5 à 9, **caractérisé en ce que**, considérées dans une direction perpendiculaire à l'axe longitudinal (B) de l'élément déformable (9), des ouvertures des bandes de liaison (12) sont disposées sur les nervures de liaison (22) plus loin de l'axe longitudinal (B) sous forme d'ouvertures des bandes de liaison (12) sur le bord de trémie (17).

11. Appareil électroménager (1) selon l'une des revendications précédentes, **caractérisé en ce que** les bandes de liaison (12) sont disposées dans la direction circonférentielle autour d'un axe longitudinal (B) de l'élément déformable (9) en étant espacées, en particulier équidistantes.

12. Appareil électroménager (1) selon l'une des revendications précédentes, **caractérisé en ce que** le premier élément à déformation (10) et/ou le second élément à déformation (11) présente(nt) une élasticité de déformation différente de celle des bandes de liaison (12), en particulier une élasticité de déformation inférieure.

13. Appareil électroménager (1) selon l'une des revendications précédentes, **caractérisé en ce que** l'élément déformable (9) est formé d'un seul tenant.

14. Appareil électroménager (1) selon l'une des revendications précédentes, **caractérisé en ce que** l'élément déformable (9) est un élément élastomère.

15. Appareil électroménager (1) selon l'une des revendications précédentes, **caractérisé en ce que** l'amortisseur (7) est un amortisseur de frottement sans course libre.
